# FASCICULE DE BREVET EUROPEEN

(11) **EP 2 336 208 B1**
(45) Date de publication et mention de la délivrance du brevet: **20.03.2013**
(21) Numéro de dépôt: 10195703.3
(22) Date de dépôt: 17.12.2010
(51) Int. Cl.: C08G 18/10, C08G 18/48, C08G 18/71, C08L 75/08, C09J 7/02, C09J 175/08

(54) **Composition adhésive réticulable par chauffage**
Hitzehärtende Klebezusammensetzung
Heat-curable adhesive composition

(30) Priorité: 21.12.2009 FR 0906194
(43) Date de publication de la demande: 22.06.2011
(73) Titulaire: Bostik S.A., 92902 Paris La Defense Cedex (FR)
(72) Inventeur: Laferte, Olivier M., 60350, TROSLY BREUIL (FR); Goubard, David M., 60200, COMPIEGNE (FR)
(74) Mandataire: Granet, Pierre

(56) Documents cités:
- EP-A1- 0 931 800
- EP-A1- 2 025 715
- WO-A1-98/30648
- WO-A2-2009/106699
- US-A1- 2004 180 155
- US-A1- 2007 088 137
- DATABASE WPI Week 200706, Derwent Publications Ltd., London, GB; AN 2007-048439 & JP 2006 291021 A (KANEKA CORP) 26 Octobre 2006

## Description

La présente invention a pour objet une composition adhésive réticulable par chauffage, et un support auto-adhésif revêtu d'un adhésif sensible à la pression consistant en ladite composition réticulée. Ledit support autoadhésif est utile pour la fabrication d'étiquettes et/ou de rubans auto-adhésifs et possède avantageusement un pouvoir adhésif dans un large domaine de température.

Les adhésifs sensibles à la pression (également dénommés colles auto-adhésives ou encore, en anglais, "Pressure Sensitive Adhesives" ou PSA) sont des substances conférant à la couche support qui en est revêtue un pouvoir collant immédiat à température ambiante (souvent désigné sous le terme de "tack"), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives. Les PSA sont également mis en oeuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; le maintien de câbles électriques dans l'industrie des transports ; le collage des moquettes par rubans adhésifs à double face.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en g/m²) désignée ci-après par le terme de "grammage". La couche support est constituée de papier ou de film d'un matériau polymère à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueur déterminées.

Les PSA permettent, en raison de leur tack élevé à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Il existe un domaine d'application des PSA pour lequel il est souhaitable que le pouvoir adhésif des étiquettes et/ou rubans sur le substrat soit également maintenu lorsque le joint de colle assurant la fixation est exposé (de même, par conséquent, que l'article revêtu de l'étiquette et/ou du ruban) à une température susceptible de varier dans un large domaine. On peut citer à titre d' exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en oeuvre de rubans auto-adhésifs pour l'assemblage de pièces pour lesquelles une bonne tenue thermique est nécessaire comme dans le cas, par exemple, de l'habillage intérieur des avions ou autres véhicules.

Des PSA souvent utilisés pour ce domaine d'application comprennent des polymères (ou copolymères) de type acrylate de masse molaire très élevée. Ces derniers se présentent sous la forme soit d'émulsion aqueuse soit de solution organique. Toutefois, l'enduction de tels PSA sur une couche support est compliquée, au plan industriel, par le fait qu'il est nécessaire de prévoir soit une étape supplémentaire de séchage de l'émulsion, soit des installations particulières prenant en compte les problèmes d'hygiène et de sécurité industrielles liés à l'évaporation du solvant organique. Dans les 2 cas, les inconvénients liés à l'odeur désagréable des acryliques doivent également être pris en compte.

On connaît des PSA qui ne comprennent ni solvant ni eau. Ainsi, les adhésifs thermofusibles sensibles à la pression (également dénommés en anglais Hot Melt Pressure Sensitive Adhesive ou HMPSA) sont des substances solides à température ambiante, qui sont déposées (ou enduites) sur le support à l'état fondu, et assurent à ce dernier après refroidissement un tack et un pouvoir adhésif importants sur divers substrats. Cependant, les compositions correspondantes comprennent généralement un polymère thermoplastique, de sorte que le joint de colle assurant la fixation du support au substrat ne présente pas à température élevée toute la cohésion nécessaire pour le domaine d' application visé précédemment.

On connaît également, par la demande internationale WO 09/106699, une composition adhésive réticulable par chauffage, à base d'un polyuréthane comprenant 2 groupes terminaux de type alkoxysilane hydrolysables. Cette composition conduit, après enduction sur un support puis réticulation, à un adhésif sensible à la pression qui possède des propriétés avantageuses de pouvoir adhésif et de tack. De plus, le joint de colle qui assure la fixation du support auto-adhésif ainsi obtenu sur un substrat garde la cohésion requise sur un large domaine de température.

Le temps de réticulation nécessaire pour obtenir ces propriétés avantageuses d'adhésion est un paramètre particulièrement important sur le plan de la production industrielle des supports auto-adhésifs. Il détermine en effet le dimensionnement du four nécessaire au chauffage, ainsi que le temps de séjour correspondant de la couche support enduite, ou encore la consommation énergétique, et donc la productivité du procédé dans son ensemble.

La présente invention a pour but de diminuer ce temps de réticulation, tout en conservant les propriétés avantageuses d'adhésion de l'adhésif sensible à la pression décrit par la demande WO 09/106699.

Un autre but de la présente invention est de proposer un adhésif sensible à la pression possédant des propriétés avantageuses de pouvoir adhésif et de tack.

Un autre but de la présente invention est de proposer un support auto-adhésif tel que le joint de colle résultant de sa fixation sur un substrat garde la cohésion requise sur un large domaine de température.

Il a à présent été trouvé que ces buts peuvent être atteints en totalité ou en partie au moyen de la composition adhésive et du support auto-adhésif qui sont décrits ci-après.

La présente invention a donc pour objet en premier lieu une composition adhésive réticulable par chauffage comprenant :
- de 20 à 85 % d'un (ou plusieurs) polyéther (A) comprenant 2 groupes terminaux de type alkoxysilane hydrolysables, ayant une viscosité mesurée à 23°C allant de 25 à 40 Pa.s et pour formule (1) : 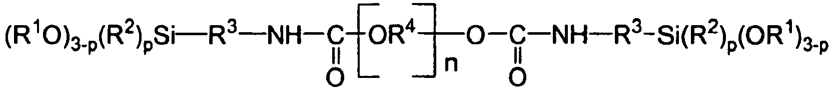 dans laquelle :
   - R¹ et R², identiques ou différents, représentent chacun un radical alkyle linéaire ou ramifié de 1 à 4 atomes de carbone, avec la possibilité lorsqu'il y a plusieurs radicaux R¹ (ou R²) que ceux-ci soient identiques ou différents ;
   - R³ représente un radical divalent alkylène linéaire comprenant de 1 à 6 atomes de carbone ;
   - R⁴ représente un radical divalent alkylène linéaire ou ramifié comprenant de 1 à 4 atomes de carbone ;
   - n est un nombre entier tel que la masse molaire moyenne en nombre Mn du polymère de formule (I) est comprise entre 20 kDa et 40 kDa ;
   - p est un nombre entier égal à 0, 1 ou 2 ;
   - de 15 à 80 % d'une (ou plusieurs) résine tackifiante compatible (B), de masse molaire moyenne en nombre comprise entre 200 Da et 10 kDa ; et
   - de 0,01 à 3 % d'un catalyseur de réticulation (C).

Dans le présent texte et en l'absence d'indication contraire :
- les quantités exprimées sous la forme de pourcentage correspondent à des pourcentages poids/poids ;
- les radicaux R¹ à R⁴ ainsi que les entiers n et p conservent dans les différentes formules chimiques la même signification que celle définie ci-dessus ;
- les masses molaires moyennes en nombre et en poids sont exprimées en Dalton (Da) et sont déterminées par chromatographie par perméation de gel, la colonne étant calibrée avec des étalons de Polystyrène ;
- les viscosités à 23°C indiquées sont mesurées au viscosimètre Brookfield, avec une aiguille 7 tournant à une vitesse adaptée à la sensibilité du capteur (en moyenne à 20 tr/min).

Le polymère (A) de formule (I) compris dans la composition selon l'invention peut être obtenu en faisant réagir un polyéther diol de formule (II) :

H-[OR⁴]ₙ-OH (II)

avec un isocyanatosilane de formule (III) :

NCO-R³-Si(R²)ₚ(OR¹)₃₋ₚ (III)

à raison d'environ une mole de polyéther diol de formule (II) pour 2 moles du composé de formule (III).

Les polyéthers diols de formule (II) sont largement disponibles dans le commerce, et les isocyanatosilanes de formule (III) le sont également. On peut citer à titre d'exemple de ces derniers le gamma-isocyanato-n-propyl-triméthoxysilane qui est disponible sous la dénomination Geniosil^{®} GF 40 ou encore le alpha-isocyanato-n-méthyl-méthyldiméthoxysilane qui est disponible sous la dénomination commerciale Geniosil^{®} XL 42, tous deux auprès de la société Wacker.

Cette étape de synthèse est conduite dans des conditions anhydres, de manière à éviter l'hydrolyse des groupes alkoxysilanes. Un domaine de température typique pour la mise en oeuvre de cette réaction est de 30° à 120°C, et plus particulièrement de 60 à 90°C. Une légère variation par rapport aux stoechiométries données précédemment peut être envisagée sans inconvénient, à condition toutefois de ne pas dépasser 2%.

Des polyéthers (A) de formule (I) sont également disponibles dans le commerce.

Selon une variante préférée de la composition adhésive selon l'invention, le (ou les) polyéther (A) de formule (I) a l'une et/ou l'autre des caractéristiques suivantes :
- R¹et R², identiques ou différents, représentent chacun un radical méthyle ou éthyle;
- R³ représente un radical divalent alkylène linéaire comprenant de 1 à 3 atomes de carbone ;
- R⁴ est choisi parmi les radicaux divalents : éthylène, isopropylène, n-propylène, n-butylène, éthyl-éthylène.

Selon une variante encore davantage préférée de la composition adhésive selon l'invention, le (ou les) polyéther (A) de formule (I) est tel que :
- p=0 ou 1;
- R¹et R² représentent chacun le radical méthyle ; et
- R⁴ est un radical alkylène à 3 atomes de carbone.

Selon une autre variante préférée de la composition selon l'invention, le polyéther (A) de formule (I) est tel que sa masse molaire moyenne en nombre varie de 30 à 40 kDa et sa viscosité de 30 à 37 Pa.s.

Selon une variante également avantageuse de la composition selon l'invention, le polyéther (A) de formule (I) a un indice de polymolécularité allant de 1 à 2. L'indice de polymolécularité est le rapport de la masse moléculaire moyenne en poids à la masse moléculaire moyenne en nombre. Dans ce cas, le polyéther (A) de formule (I) peut être préparé à partir d'un polyéther diol de formule (II) ayant lui-même un indice de polymolécularité allant de 1 à 2. Ce dernier polyéther diol peut être obtenu, de façon connue, par polymérisation de l'oxyde d'alkylène correspondant en présence d'un catalyseur à base d'un double complexe métal-cyanure.

En ce qui concerne la ou les résines tackifiantes (B) qui sont comprises dans la composition selon l'invention, on entend désigner par les termes "résine tackifiante compatible" une résine tackifiante qui, lorsqu'elle est mélangée dans les proportions 50%/50% avec le polymère (A) de formule (I), donne un mélange substantiellement homogène.

Les résines (B) sont avantageusement choisies parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, résultant généralement de la polymérisation d'hydrocarbures terpéniques comme par exemple le mono-terpène (ou pinène) en présence de catalyseurs de Friedel-Crafts ;
- (vi) les copolymères à base de terpènes naturels, par exemple le styrène/terpène, l'alpha-méthyl styrène/terpène et le vinyl toluène/terpène ; ou bien
- (vii) les résines acryliques ayant une viscosité à 100°C inférieure à 100 Pa.s.

De telles résines sont disponibles commercialement et parmi celles de type (i), (ii) et (iii) définis ci-dessus, on peut citer les produits suivants :
- résines de type (i) : Dertophène^{®} 1510 disponible auprès de la société DRT possédant une masse molaire Mn d'environ 870 Da ; Dertophène^{®} H150 disponible auprès de la même société de masse molaire Mn égale à environ 630 Da ; Sylvarez^{®} TP 95 disponible auprès de la société Arizona Chemical ayant une masse molaire Mn d'environ 1200 Da ;
- résines de type (ii) : Norsolène^{®} W100 disponible auprès de la société Cray Valley , qui est obtenue par polymérisation d'alpha-méthyl styrène sans action de phénols, avec une masse molaire en nombre de 900 Da ; Sylvarez^{®} 510 qui est également disponible auprès de la société Arizona Chemical avec une masse molaire Mn d'environ 1740 Da, dont le procédé d'obtention comprend également l'ajout de phénols.
- résines de type (iii) : Sylvalite^{®} RE 100 qui est un ester de collophane et de pentaeréthritol disponible auprès de la société Arizona Chemical et de masse molaire Mn environ 1700 Da.

Selon une variante préférée, on utilise comme résine (B) une résine choisie parmi celles de type (i) ou (ii).

Selon une autre variante préférée, on utilise comme résine (B) une résine de type (iii) et de préférence un ester de collophane.

Le catalyseur de réticulation (C) utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société King Industries), des amines comme le 1,8-diazobicyclo (5.4.0) undécène-7 ou DBU.

Selon une variante préférée, la composition adhésive réticulable à chaud comprend de 40 à 65 % du polyéther (A) de formule (I) et de 35 à 60 % de résine(s) tackifiante(s) (B).

A titre optionnel, la composition selon l'invention peut également inclure, en combinaison avec le polyéther (A) de formule (I), des polymères thermoplastiques souvent utilisés dans la préparation des HMPSA, tels que l'Ethylène Vinyl Acétate (EVA) ou des copolymères blocs styréniques.

La composition adhésive réticulable à chaud selon l'invention peut en outre comprendre jusqu'à 3 % d'un dérivé alkoxysilane hydrolysable, en tant qu'agent dessicant, et de préférence un dérivé de triméthoxysilane. Un tel agent prolonge avantageusement la durée de conservation de la composition selon l'invention durant le stockage et le transport, avant son utilisation. On peut citer par exemple le gamma-métacryloxypropyltriméthoxysilane disponible sous la dénomination commerciale SILQUEST^{®} A-174 auprès de la société US Momentive Performance Materials Inc.

La composition selon l'invention peut aussi inclure un plastifiant tel qu'un phtalate ou un benzoate, une huile paraffinique et naphténique (comme le Primol^{®} 352 de la société ESSO) ou encore une cire d'un homopolymère de polyethylène (comme l'A-C^{®} 617 de Honeywell), ou une cire d'un copolymère de polyéthylène et d'acétate de vinyle, ou encore des pigments, des colorants ou des charges.

Enfin, une quantité de 0,1 à 2 % d'un ou plusieurs stabilisants (ou anti-oxydants) est de préférence incluse dans la composition selon l'invention. Ces composés sont introduits pour protéger la composition d'une dégradation résultant d'une réaction avec de l'oxygène qui est susceptible de se former par action de la chaleur ou de la lumière. Ces composés peuvent inclure des anti-oxydants primaires qui piègent les radicaux libres et sont notamment des phénols substitués comme l'Irganox^{®} 1076 de CIBA. Les anti-oxydants primaires peuvent être utilisés seuls ou en combinaison avec d'autres anti-oxydants secondaires ou des stabilisants UV.

La composition adhésive réticulable à chaud selon l'invention peut être préparée par un procédé qui comprend :
- une étape de mélange à l'abri de l'air, de préférence sous atmosphère inerte, du polymère (A) de formule (I) avec la ou les résines tackifiantes (B), à une température comprise entre 50 et 170°C, de préférence entre 100 et 170°C, puis
- une étape de refroidissement dudit mélange à une température allant de 50 à 90°C, et avantageusement d'environ 70 °C, puis
- une étape d'incorporation dans ledit mélange du catalyseur (C) et, le cas échéant, de l'agent dessicant et des autres composants optionnels.

La présente invention a également pour objet un support auto-adhésif susceptible d'être obtenu par le procédé comprenant :
- (a) le préchauffage à une température comprise entre 50 et 130°C de la composition adhésive telle que définie précédemment, puis
- (b) son enduction sur une couche support, puis
- (c) sa réticulation, par chauffage du support ainsi enduit à une température comprise entre 50 et 150°C.

L'étape (b) d'enduction de la couche support est réalisée au moyen de dispositifs d'enduction connus, comme par exemple une buse à lèvre ou de type rideau, ou encore au rouleau. Elle met en oeuvre un grammage de composition adhésive allant de 3 à 500 g/m², de préférence de 10 à 250 g/m². Le matériau utilisable pour la couche support est par exemple du papier ou un film d' un matériau polymère à une ou plusieurs couches.

Le temps nécessaire à la réticulation de l'étape (c) peut varier dans de larges limites, par exemple entre 1 seconde et 10 minutes, en fonction du grammage de composition adhésive déposé sur la couche support, de la température de chauffage, et de l'humidité relative.

Cette étape de réticulation thermique a pour effet la création - entre les chaînes polymériques du polyéther de formule (I) et sous l'action de l'humidité atmosphérique- de liaisons de type siloxane qui conduisent à la formation d'un réseau polymérique tridimensionnel. La composition adhésive ainsi réticulée est un adhésif sensible à la pression qui confère à la couche support qui en est revêtue le pouvoir adhésif et le tack désirables.

Ainsi, un support de PolyEthylèneTéréphtalate (PET) d'épaisseur 50 µm, revêtu à raison d'un grammage de 50 g/m², présente une adhésion permanente sur un substrat d'acier inoxydable correspondant à un pouvoir adhésif (mesuré par le test de pelage à 180° sur acier inoxydable décrit ci-après) avantageusement compris entre 1 et 40 N/cm. Le tack de ce même support à température ambiante (mesuré par le test d'adhésion instantanée de la boucle décrit ci-après) est avantageusement compris entre 1 et 20 N/cm².

Enfin, le joint de colle formé après application sur un substrat de la couche support revêtue de la composition réticulée assure la fixation de ladite couche support dans un domaine de température allant de -60°C à +200°C.

Le support auto-adhésif selon l'invention peut également comprendre une couche anti-adhérente protectrice recouvrant la couche de PSA et appliquée (ou laminée) sur celle-ci par simple pression.

La présente invention concerne également l'utilisation du support auto-adhésif défini précédemment pour la fabrication d'étiquettes et/ou rubans auto-adhésifs à simple ou double face.

Le grammage de composition adhésive réticulable à chaud nécessaire pour la fabrication d'étiquettes auto-adhésives peut aller de 10 à 100 g/m², de préférence de 20 à 50 g/m². Celui nécessaire pour la fabrication de rubans auto-adhésifs peut varier dans un domaine beaucoup plus large allant de 3 à 500 g/m², de préférence de 15 à 250 g/m²par face.

Les exemples suivants sont donnés à titre purement illustratif de invention et ne sauraient être interprétés pour en limiter la portée.

### Exemple 1: Composition adhésive réticulable par chauffage à base du polyéther à terminaisons alkoxysilanes GENIOSIL^{®} STP-E30

### 1) Préparation de la composition :

La composition figurant dans le tableau suivant est préparée en introduisant tout d'abord la résine tackifiante Dertophène^{®} H150 dans un réacteur en verre sous vide et chauffé à environ 160°C. Puis, une fois la résine bien fondue, le GENIOSIL^{®} STP-E30 est ajouté.

Le GENIOSIL^{®} STP-E30, disponible auprès de la société Wacker, est un polyéther de formule (I) dans laquelle p égale 1, R¹ et R² représentent le radical méthyle, R³ est le radical méthylène, R⁴ est un radical alkylène à 3 atomes de carbone. Ce polyéther a pour viscosité (mesurée à 23°C) 30 Pa.s, pour Mn 38 kDa et pour indice de polymolécularité 1,9.

Le mélange est agité sous vide durant 15 minutes, puis refroidi à 70°C. Le catalyseur (K-KAT^{®} 5218) est alors introduit. Le mélange est maintenu sous vide et sous agitation durant 10 minutes supplémentaires.

La viscosité du mélange est ensuite déterminée à 100°C, au moyen d'un viscosimètre de type Brookfield (équipé du système Thermosel destiné aux mesures de viscosité à haute température) muni d'une aiguille A29 tournant à une vitesse adaptée à la sensibilité du capteur (en moyenne 10 tr/min).

Le résultat, exprimé en Pa.s, est indiqué dans le tableau.

### 2) Préparation d'une couche support PET revêtue de la composition réticulée, à raison d'un grammage égal à 50 g/m² :

On utilise comme couche support une feuille rectangulaire de PolyEthylèneTéréphtalate (PET) d'épaisseur 50 µm et de dimensions 20 cm sur 40 cm.

On préchauffe la composition obtenue en 1) à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/m², ce qui représente environ une épaisseur de l'ordre de 50 µm.

La feuille de PET ainsi revêtue est alors placée dans une étuve à 120 °C durant 30 secondes pour réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après.

### Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans la couche support PET revêtue de la composition réticulée obtenue précédemment. Cette éprouvette est, après sa préparation, stockée durant 24 heures à une température de 23°C et dans une atmosphère à 50 % d'humidité. Elle est ensuite fixée sur les 2/3 de sa longueur (après enlèvement de la portion de couche anti-adhérente protectrice correspondante) sur un substrat constitué d'une plaque d'acier inoxydable. L'assemblage obtenu est laissé 20 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Les résultats correspondants sont exprimés en N/cm et indiqués dans le tableau.

### Test d'adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans la couche support PET revêtue de la composition réticulée obtenue précédemment. Cette éprouvette est, après sa préparation, stockée durant 24 heures à une température de 23°C et dans une atmosphère à 50 % d'humidité. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Les résultats correspondants sont exprimés en N/cm² et sont indiqués dans le tableau.

### Temps de résistance du joint de colle au cisaillement statique à 95°C :

Le maintien à température élevée du pouvoir adhésif de la couche support PET revêtue de la composition réticulée est évalué au plus tard dans les 5 heures de son obtention par un test qui détermine le temps de résistance du joint de colle au cisaillement statique à 95°C. Il est fait référence pour ce test à la méthode FINAT n° 8. Le principe est le suivant.

Une éprouvette sous forme de bande rectangulaire (25 mm x 75 mm) est découpée dans la couche support PET revêtue de la composition réticulée préparée précédemment, au maximum 5 heures après sa préparation. Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 95°C, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 95°C.

Sous l'effet de cette masse, le joint de colle qui assure la fixation de la bande sur la plaque est soumis à une contrainte de cisaillement. Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Ce temps est indiqué dans le tableau.

### Exemples 2 et 3: Composition adhésive réticulable par chauffage à base (respectivement) des polyéthers à terminaisons alkoxysilanes GENIOSIL^{®} STP-E35 et DESMOSEAL^{®} S XP 2636

Le GENIOSIL^{®} STP-E35 est un polyéther de formule (I) dans laquelle p égale 0, R¹ est le radical méthyle, R³ est le radical n-propylène, R⁴ est un radical alkylène à 3 atomes de carbone. Ce polyéther a pour viscosité (mesurée à 23°C) 30 Pa.s, pour Mn 32240 Da et pour indice de polymolécularité 1,3.

Le DESMOSEAL^{®} S XP 2636, disponible auprès de la société Bayer, est un polyéther de formule (I) dans laquelle p égale 0, R¹ est le radical méthyle, R³ est le radical n-propylène, R⁴ est un radical alkylène à 3 atomes de carbone. Ce polyéther a pour viscosité (mesurée à 23°C) 35 Pa.s, pour Mn 33408 Da et pour indice de polymolécularité 1,9.

On répète l'exemple 1 avec les compositions indiquées dans le tableau, dans lequel sont aussi rassemblés les résultats obtenus pour les tests.

### Exemples 4 et 5: Composition adhésive réticulable par chauffage à base du polyéther à terminaisons alkoxysilanes DESMOSEAL^{®} S XP 2636

On répète l'exemple 3 avec les résines tackifiantes (B) indiquées dans le tableau, qui rassemble également les résultats obtenus pour les tests.

### Exemple A (comparatif) : Composition adhésive réticulable par chauffage correspondant à l'exemple 2 du WO 09/106699

On répète l'exemple 1 en remplaçant le polyéther à terminaisons alkoxysilanes par le polyuréthane A à terminaisons alkoxysilanes illustré dans la demande internationale WO 09/106699, pour obtenir la composition indiquée dans le tableau. Cette composition est quasiment identique à celle de l'exemple 2 du WO 09/106699.

Les résultats obtenus pour les tests sont également rassemblés dans le tableau.

Les compositions adhésives des exemples 1 à 5 permettent l'obtention, pour un temps de réticulation par chauffage de 30 s, d'un support auto-adhésif qui présente de bonnes propriétés de tack et de pouvoir adhésif. Ce dernier offre de plus un excellent maintien à 95°C, au contraire de celui obtenu, dans les mêmes conditions, avec la composition adhésive de l'exemple A.

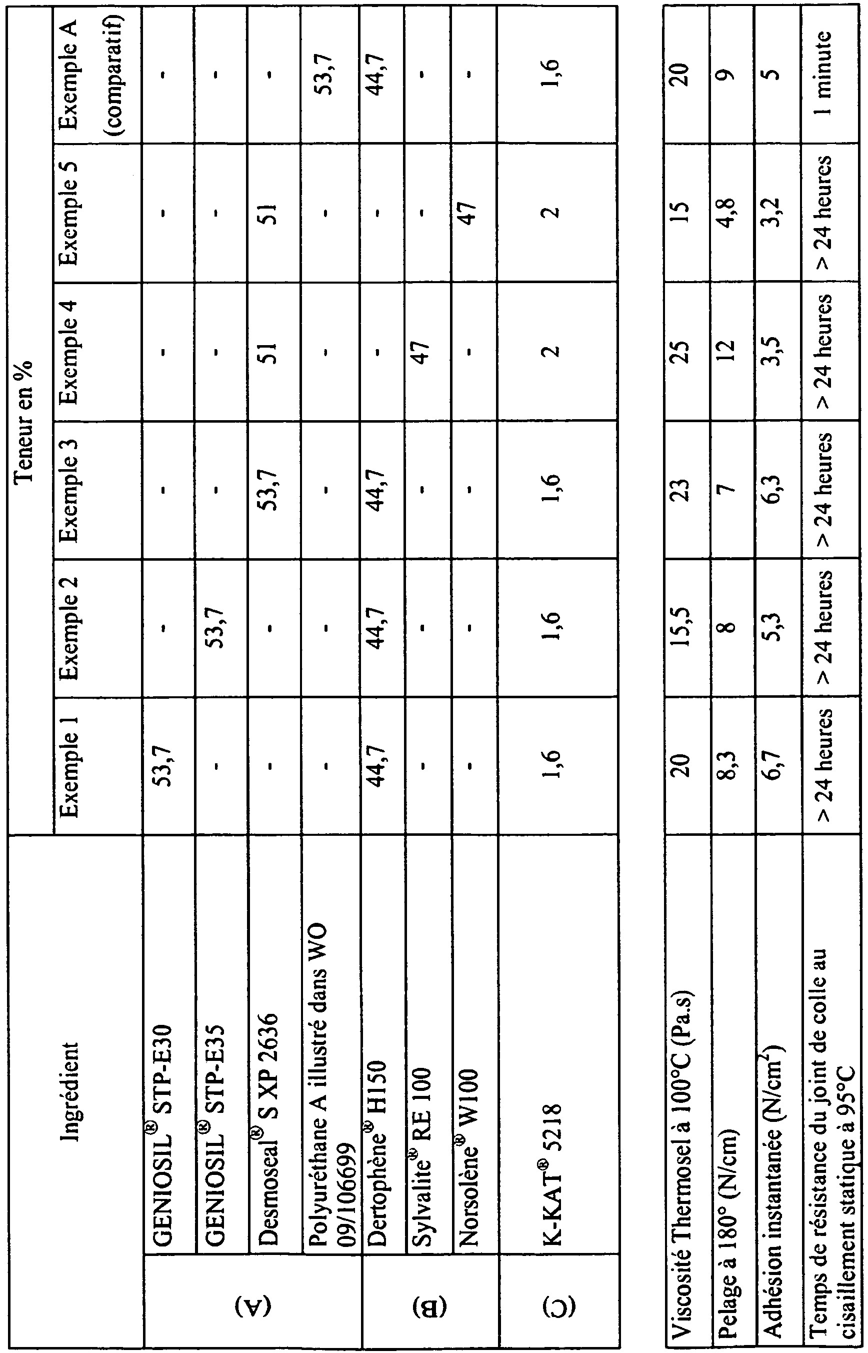

## Revendications

1. Composition adhésive réticulable par chauffage comprenant :
- de 20 à 85 % poids/poids d'un polyéther (A) comprenant 2 groupes terminaux de type alkoxysilane hydrolysables, ayant une viscosité Brookfield mesurée à 23°C allant de 25 à 40 Pa.s et pour formule (1) : 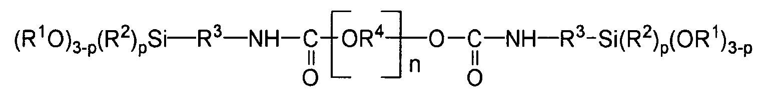 dans laquelle :
- R¹ et R², identiques ou différents, représentent chacun un radical alkyle linéaire ou ramifié de 1 à 4 atomes de carbone, avec la possibilité lorsqu'il y a plusieurs radicaux R¹ (ou R²) que ceux-ci soient identiques ou différents ; -,
- R³ représente un radical divalent alkylène linéaire comprenant de 1 à 6 atomes de carbone ;
- R⁴ représente un radical divalent alkylène linéaire ou ramifié comprenant de 1 à 4 atomes de carbone ;
- n est un nombre entier tel que la masse molaire moyenne en nombre Mn du polymère de formule (I) est comprise entre 20 kDa et 40 kDa ;
- p est un nombre entier égal à 0, 1 ou 2 ;
- de 15 à 80 % poids/poids d'une résine tackifiante compatible (B), de masse molaire moyenne en nombre comprise entre 200 Da et 10 kDa ; et
- de 0,01 à 3 % poids/poids d'un catalyseur de réticulation (C)
lesdites masses molaires moyennes en nombre étant déterminées par chromatographie par perméation de gel, la colonne étant calibrée avec des étalons de Polystyrène.

2. Composition adhésive selon la revendication 1, **caractérisée en ce que** le polyéther (A) de formule (I) a l'une et/ou l'autre des caractéristiques suivantes :
- R¹ et R², identiques ou différents, représentent chacun un radical méthyle ou éthyle;
- R³ représente un radical divalent alkylène linéaire comprenant de 1 à 3 atomes de carbone ;
- R⁴ est choisi parmi les radicaux divalents : éthylène, isopropylène, n-propylène, n-butylène, éthyl-éthylène.

3. Composition adhésive selon l'une des revendications 1 ou 2, **caractérisée en ce que** le polyéther (A) de formule (I) est tel que :
- p=0 ou 1;
- R¹ et R² représentent chacun le radical méthyle ; et
- R⁴ est un radical alkylène à 3 atomes de carbone.

4. Composition adhésive selon l'une des revendications 1 à 3, **caractérisée en ce que** le polyéther (A) de formule (I) est tel que sa masse molaire moyenne en nombre varie de 30 à 40 kDa et sa viscosité de 30 à 37 Pa.s.

5. Composition adhésive selon l'une des revendications 1 à 4, **caractérisée en ce que** le polyéther (A) de formule (I) a un indice de polymolécularité allant de 1 à 2.

6. Composition adhésive selon l'une des revendications 1 à 5, **caractérisée en ce que** la résine (B) est choisie parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène ;
- (iii) les colophanes d'origine naturelle ou modifiées, et leurs dérivés hydrogénés, dimérisés, polymérisés ou estérifiés par des monoalcools ou des polyols ;
- (iv) les résines obtenues par hydrogénation, polymérisation ou copolymérisation de mélanges d'hydrocarbures aliphatiques insaturés ayant environ 5, 9 ou 10 atomes de carbone issus de coupes pétrolières ;
- (v) les résines terpéniques ;
- (vi) les copolymères à base de terpènes naturels ; ou bien
- (vii) les résines acryliques ayant une viscosité à 100°C inférieure à 100 Pa.s.

7. Composition adhésive selon la revendication 6, **caractérisée en ce que** la résine (B) est choisie parmi les résines de type (i) ou (ii).

8. Composition adhésive selon la revendication 6, **caractérisée en ce que** la résine (B) est choisie parmi les résines de type (iii).

9. Composition adhésive selon l'une des revendications 1 à 8, **caractérisée en ce qu'**elle comprend de 40 à 65 % du polyéther (A) de formule (I) et de 35 à 60 % de résine(s) tackifiante(s) (B).

10. Composition adhésive selon l'une des revendications 1 à 9, **caractérisée en ce qu'**elle comprend jusqu'à 3 % poids/poids d'un dérivé alkoxysilane hydrolysable, en tant qu'agent dessicant.

11. Support auto-adhésif susceptible d'être obtenu par le procédé comprenant :
- (a) le préchauffage à une température comprise entre 50 et 130°C de la composition adhésive telle que définie dans l'une des revendications 1 à 10, puis
- (b) son enduction sur une couche support, puis
- (c) sa réticulation, par chauffage du support ainsi enduit à une température comprise entre 50 et 150°C.

12. Utilisation du support auto-adhésif défini dans la revendication 11 pour la fabrication d'étiquettes et/ou rubans auto-adhésifs à simple ou double face.

## Claims

1. Heat-curable adhesive composition comprising:
- from 20 to 85% weight/weight of a polyether (A) comprising 2 hydrolysable alkoxysilane-type end groups, having a Brookfield viscosity, measured at 23°C, ranging from 25 to 40 Pa.s and of formula (I): 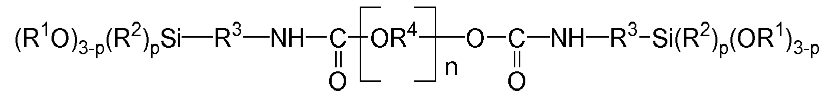 in which:
- R¹ and R² which are identical or different, each represent a linear or branched alkyl radical having 1 to 4 carbon atoms, with the possibility, when there are several R¹ (or R²) radicals, that these are identical or different;
- R³ represents a linear alkylene divalent radical comprising from 1 to 6 carbon atoms;
- radical comprising from 1 to 4 carbon atoms;
- n is an integer such that the number-average molecular weight Mₙ of the polymer of formula (I) is between 20 kDa and 40 kDa;
- p is an integer equal to 0, 1 or 2;
- from 15 to 80% weight/weight of a compatible tackifying resin (B), having a number-average molecular weight between 200 Da and 10 kDa; and
- from 0.01 to 3% weight/weight of a curing catalyst (C);
- said number-average molecular weights being determined by gel permeation chromatography, the column being calibrated with polystyrene standards.

2. Adhesive composition according to Claim 1, **characterized in that** the polyether (A) of formula (I) has one and/or the other of the following features:
- R¹ and R², which are identical or different, each represent a methyl or ethyl radical;
- R³ represents a linear alkylene divalent radical comprising from 1 to 3 carbon atoms;
- R⁴ is chosen from the divalent radicals: ethylene, isopropylene, n-propylene, n-butylene, ethyl-ethylene.

3. Adhesive composition according to either of Claims 1 or 2, **characterized in that** the polyether (A) of formula (I) is such that:
- p = 0 or 1;
- R¹ and R² each represent the methyl radical; and
- R⁴ is an alkylene radical having 3 carbon atoms.

4. Adhesive composition according to one of Claims 1 to 3, **characterized in that** the polyether (A) of formula (I) is such that its number-average molecular weight varies from 30 to 40 kDa and its viscosity from 30 to 37 Pa.s.

5. Adhesive composition according to one of Claims 1 to 4, **characterized in that** the polyether (A) of formula (I) has a polydispersity index ranging from 1 to 2.

6. Adhesive composition according to one of Claims 1 to 5, **characterized in that** the resin (B) is chosen from:
- (i) resins obtained by polymerization of terpene hydrocarbons and phenols, in the presence of Friedel-Crafts catalysts;
- (ii) resins obtained by a process comprising the polymerization of α-methylstyrene;
- (iii) natural or modified rosins, and their derivatives that are hydrogenated, dimerized, polymerized or esterified by monoalcohols or polyols;
- (iv) resins obtained by hydrogenation, polymerization or copolymerization of mixtures of unsaturated aliphatic hydrocarbons having around 5, 9 or 10 carbon atoms derived from petroleum fractions;
- (v) terpene resins;
- (vi) copolymers based on natural terpenes; or else
- (vii) acrylic resins having a viscosity at 100°C of less than 100 Pa.s.

7. Adhesive composition according to Claim 6, **characterized in that** the resin (B) is chosen from resins of type (i) or (ii).

8. Adhesive composition according to Claim 6, **characterized in that** the resin (B) is chosen from resins of type (iii).

9. Adhesive composition according to one of Claims 1 to 8, **characterized in that** it comprises from 40 to 65% of polyether (A) of formula (I) and from 35 to 60% of tackifying resin(s) (B).

10. Adhesive composition according to one of Claims 1 to 9, **characterized in that** it comprises up to 3% weight/weight of a hydrolysable alkoxysilane derivative, as a desiccant.

11. Self-adhesive support capable of being obtained by the process comprising:
- (a) preheating the adhesive composition as defined in one of Claims 1 to 10 to a temperature between 50 and 130°C; then
- (b) coating it onto a support layer; then
- (c) curing it, by heating the thus coated support at a temperature between 50 and 150°C.

12. Use of the self-adhesive support as defined in Claim 11 for the manufacture of single-sided or double-sided self-adhesive labels and/or tapes.

## Patentansprüche

1. Wärmevernetzbare Klebstoffzusammensetzung, die Folgendes umfasst:
- 20 bis 85 % (w/w) eines Polyethers (A), der 2 endständige Gruppen des Typs hydrolysierbares Alkoxysilan umfasst, eine Brookfield-Viskosität hat, die bei einer Messung bei 23 °C im Bereich von 25 bis 40 Pa.s liegt, und der Formel (I) entspricht: 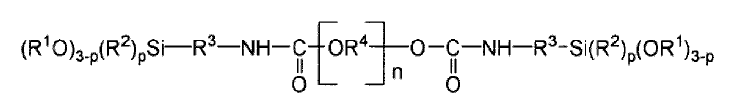 wobei:
- R¹ und R², die identisch oder verschiedenartig sind, jeweils für einen geradkettigen oder verzweigten Alkylrest mit 1 bis 4 Kohlenstoffatomen stehen, wobei im Falle mehrerer R¹- (oder R²-) Reste die Möglichkeit besteht, dass diese identisch oder verschiedenartig sind;
- R³ für einen geradkettigen zweibindigen Alkylenrest steht, der 1 bis 6 Kohlenstoffatome umfasst;
- R⁴ für einen geradkettigen oder verzweigten zweibindigen Alkylenrest steht, der 1 bis 4 Kohlenstoffatome umfasst;
- n eine ganze Zahl ist, derart, dass das Zahlenmittel des Molekulargewichts Mn des Polymers nach Formel (I) im Bereich von 20 kDa bis 40 kDa liegt;
- p eine ganze Zahl ist, die gleich 0, 1 oder 2 ist;
- 15 bis 80 % (w/w) eines verträglichen Klebrigmacherharzes (B), mit einem Zahlenmittel des Molekulargewichts im Bereich von 200 Da bis 10 kDa; und
- 0,01 bis 3 % (w/w) eines Vernetzungskatalysators (C);
wobei die Zahlenmittel des Molekulargewichts mittels Gelpermeationschromatographie bestimmt werden, wobei die Säule mit Polystyrolstandards kalibriert wird.

2. Klebstoffzusammensetzung nach Anspruch 1, **dadurch gekennzeichnet, dass** der Polyether (A) nach Formel (I) eine oder mehrere der folgenden Eigenschaftsmerkmale aufweist:
- R¹ und R², die identisch oder verschiedenartig sind, stehen jeweils für einen Methyl- oder Ethylrest;
- R³ steht für einen geradkettigen zweibindigen Alkylenrest, der 1 bis 3 Kohlenstoffatome umfasst;
- R⁴ ist aus den folgenden zweibindigen Resten ausgewählt: Ethylen, Isopropylen, n-Propylen, n-Butylen, Ethylethylen.

3. Klebstoffzusammmensetzung nach einem der Ansprüche 1 oder 2, **dadurch gekennzeichnet, dass** der Polyether (A) nach Formel (I) derart ist, dass:
- p = 0 oder 1;
- R¹ und R² jeweils für einen Methylrest stehen; und
- R⁴ ein Alkylenrest mit 3 Kohlenstoffatomen ist.

4. Klebstoffzusammmensetzung nach einem der Ansprüche 1 bis 3, **dadurch gekennzeichnet, dass** der Polyether (A) nach Formel (I) derart ist, dass das Zahlenmittel des Molekulargewichts im Bereich von 30 bis 40 kDa liegt und seine Viskosität im Bereich von 30 bis 37 Pa.s.

5. Klebstoffzusammmensetzung nach einem der Ansprüche 1 bis 4, **dadurch gekennzeichnet, dass** der Polyether (A) nach Formel (I) einen Polydispersitätsindex im Bereich von 1 bis 2 hat.

6. Klebstoffzusammmensetzung nach einem der Ansprüche 1 bis 5, **dadurch gekennzeichnet, dass** das Harz (B) aus den Folgenden ausgewählt ist:
- (i) den Harzen, die durch Polymerisation von terpenartigen Kohlenwasserstoffen und Phenolen in Gegenwart eines Friedel-Crafts-Katalysators erhalten werden;
- (ii) den Harzen, die durch ein Verfahren erhalten werden, das die Polymerisation von alpha-Methylstyrol umfasst;
- (iii) den Kolophoniumstoffen, die natürlichen Ursprungs oder modifiziert sind, und ihren hydrierten, dimerisierten, polymerisierten oder mit Monoalkoholen oder Polyolen veresterten Derivaten;
- (iv) den Harzen, die durch Hydrierung, Polymerisation oder Copolymerisation von Gemischen aus ungesättigten aliphatischen Kohlenwasserstoffen, die ungefähr 5, 9 oder 10 Kohlenstoffatome haben und aus Erdölfraktionen stammen, erhalten werden;
- (v) den Terpenharzen;
- (vi) den Copolymeren auf Basis natürlicher Terpene; oder auch
- (vii) den Acrylharzen mit einer Viskosität, die bei 100 °C geringer als 100 Pa.s ist.

7. Klebstoffzusammmensetzung nach Anspruch 6, **dadurch gekennzeichnet, dass** das Harz (B) aus den Harzen des Typs (i) oder (ii) ausgewählt ist.

8. Klebstoffzusammmensetzung nach Anspruch 6, **dadurch gekennzeichnet, dass** das Harz (B) aus den Harzen des Typs (iii) ausgewählt ist.

9. Klebstoffzusammmensetzung nach einem der Ansprüche 1 bis 8, **dadurch gekennzeichnet, dass** sie 40 bis 65 % des Polyethers (A) nach Formel (I) und 35 bis 60 % an Klebrigmacherharz(en) (B) umfasst.

10. Klebstoffzusammmensetzung nach einem der Ansprüche 1 bis 9, **dadurch gekennzeichnet, dass** sie bis zu 3 % (w/w) eines hydrolysierbaren Alkoxysilanderivats als Trockenmittel umfasst.

11. Selbstklebeträger, der mittels des Verfahrens erhalten werden kann, das Folgendes umfasst:
- (a) Vorheizen der Klebstoffzusammmensetzung gemäß der Begriffsbestimmung in einem der Ansprüche 1 bis 10 auf eine Temperatur im Bereich von 50 bis 130 °C, und dann
- (b) schichtförmiges Aufbringen derselben auf eine Trägerschicht, und dann
- (c) Vernetzung derselben, durch Erwärmen des auf diese Weise beschichteten Trägers auf eine Temperatur im Bereich von 50 bis 150 °C.

12. Verwendung des Selbstklebeträgers gemäß der Begriffsbestimmung in Anspruch 11 zur Herstellung von einseitigen oder beidseitigen selbstklebenden Etiketten und/oder Bändern.
